# EUROPÄISCHE PATENTSCHRIFT

(11) **EP 0 976 343 B1**
(45) Veröffentlichungstag und Bekanntmachung des Hinweises auf die Patenterteilung: **09.10.2002**
(21) Anmeldenummer: 99890214.2
(22) Anmeldetag: 30.06.1999
(51) Int. Cl.: A45C 3/04, B65D 33/14

(54) **Einkaufstasche**
Shopping bag
Sac à provisions

(30) Priorität: 28.07.1998 AT 50798 U
(43) Veröffentlichungstag der Anmeldung: 02.02.2000
(73) Patentinhaber: Ameisbichler, Rudolf, 3150 Wilhelmsburg (AT); Zöchling, Josef, A-3150 Wilhelmsburg (AT)
(72) Erfinder: Ameisbichler, Rudolf, 3150 Wilhelmsburg (AT); Zöchling, Josef, A-3150 Wilhelmsburg (AT)
(74) Vertreter: Rippel, Andreas, Dipl.-Ing.

(56) Entgegenhaltungen:
- DE-U- 29 703 645
- GB-A- 216 360
- US-A- 4 244 408
- US-A- 4 560 096

## Beschreibung

Die Erfindung bezieht sich auf eine Einkaufstasche aus flexiblem Material, mit zusammenwirkenden Tragegriffen am oberen Ende zweier seitlicher Wandungen.

Beim Einkaufen in mit Einkaufswagen ausgestatteten Geschäften mit Selbstbedienung ergibt sich das Problem, daß die ausgesuchten Waren vorerst in dem Einkaufswagen verstaut werden, anschließend bei der Kassa wieder aus dem Einkaufswagen auf das zur Kassa führende Transportband gelegt werden, von dort wieder in den Einkaufswagen gelegt und schließlich in das meistverwendete Transportmittel, ein Auto, gebracht werden müssen. Auch wenn eine Einkaufstasche verwendet wird, in die die Waren nach Bonieren durch die Kasse gelegt oder gestellt werden, ist die Manipulation relativ umständlich, weil diese Tasche an sich mit zwei Händen offengehalten werden muß und gleichzeitig die Ware eingelegt werden soll.

Die Erfindung hat es sich zum Ziel gesetzt, eine Einkaufstasche zu schaffen, mit deren Hilfe das Einkaufen bzw. Verstauen der eingekauften Waren vereinfacht wird. Erreicht wird dies bei einer Einkaufstasche nach Anspruch 1.

Eine erfindungsgemäße Einkaufstasche kann beim Auswählen der Waren vorerst mittels einer der Laschen außen am Einkaufswagen aufgehängt werden. Dann können die Waren ausgesucht und in den Einkaufswagen verstaut werden. Bei der Kassa werden die Waren in üblicher Weise auf das Fließband zur Registrierung gelegt und anschließend die Tasche mittels beider Laschen innen im Einkaufswagen eingehängt, wobei sich eine solche Tasche zweckmäßig etwa dem halben Innenraum des Einkaufswagens anpaßt. Die eingekauften Waren können nun mit beiden Händen einfach und bequem in die aufgespannte Tasche gelegt werden, weil die Tasche nicht wie bisher mit einer Hand gehalten werden muß. Nach dem Beladen der Tasche kann diese einfach aus dem Einkaufswagen entnommen werden.

Im Rahmen der Erfindung ist es zweckmäßig, wenn zur Sicherung gegen ein ungewolltes Öffnen der Tasche an einem der Tragegriffe eine in den anderen Tragegriff einhakbare Sicherungslasche angeordnet ist.

Zur weiteren Sicherung gegen ein Öffnen der Tasche ist es vorteilhaft, wenn an den Enden der Leisten Gummizüge befestigt sind, die die seitlichen Wandungen gegeneinander ziehen.

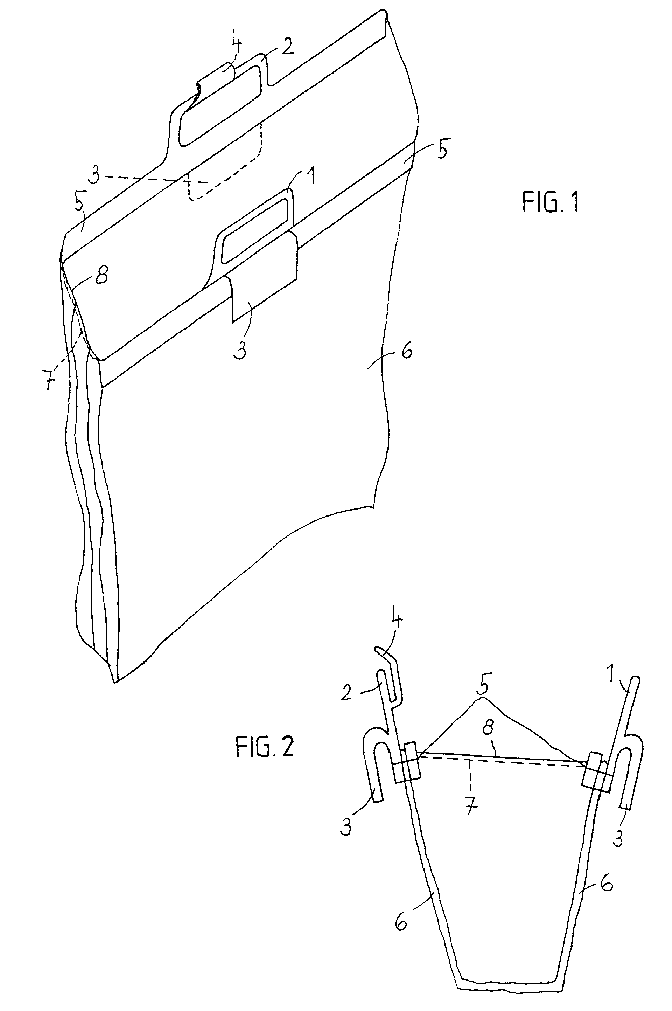

Nachstehend ist die Erfindung anhand eines in den Zeichnungen dargestellten Ausführungsbeispieles näher beschrieben. Dabei zeigt Fig. 1 in schaubildlicher Ansicht eine erfindungsgemäße Einkaufstasche und Fig. 2 stellt einen Längsschnitt durch die in Fig. 1 gezeigte Einkaufstasche dar.

Gemäß den Zeichnungen sind an den beiden Tragegriffen 1 und 2 nach außen und unten weisende Laschen 3 zum Einhängen in einen Einkaufswagen angeordnet. Am Tragegriff 2 ist eine Sicherungslasche 4 vorgesehen, die in den Tragegriff 1 eingehakt werden kann.

Die Tragegriffe 1 und 2 weisen in bekannter Weise Leisten 5 auf, zwischen denen die seitlichen Wandungen 6 der Einkaufstasche eingeklemmt sind. Diese Klemmung kann z. B. durch Vernieten, Verschrauben oder Verschweißen erreicht werden. Am Ende der Leisten 5 greift ein die beiden gegenüberliegenden Wandungen 6 zueinander ziehender Gummizug 7 an, der beim oberen Taschenrand 8 eingenäht ist.

## Patentansprüche

1. Einkaufstasche aus flexiblem Material, mit zusammenwirkenden Tragegriffen (1,2) am oberen Ende zweier seitlicher Wandungen (6), wobei an den Tragegriffen (1,2) Befestigungsorgane zum Einhängen in einen Einkaufswagen angeordnet sind, **dadurch gekennzeichnet, daß** die Tragegriffe (1,2) an Leisten (5) befestigt sind, welche die oberen Enden der seitlichen Wandungen (6) aufnehmen, und daß an den Tragegriffen je eine nach außen und unten weisende Lasche (3) zum Einhängen in einen Einkaufswagen angeordnet ist.

2. Einkaufstasche nach Anspruch 1, **dadurch gekennzeichnet, daß** an einem (2) der Tragegriffe (1,2) eine in den anderen Tragegriff (1) einhakbare Sicherungslasche (4) vorgesehen ist.

3. Einkaufstasche nach Anspruch 1 oder 2, **dadurch gekennzeichnet, daß** an den Enden der Leisten (5) Gummizüge (7) befestigt sind, die die seitlichen Wandungen (6) gegeneinander ziehen.

## Claims

1. A shopping bag of flexible material, with cooperating carrying handles (1, 2) on the upper ends of two lateral walls (6), wherein elements for suspending the shopping bag in a shopping cart are arranged on the carrying handles (1, 2), **characterized by** the fact that the carrying handles (1, 2) are fixed on strips (5) that accommodate the upper ends of the lateral walls (6), and by the fact that brackets (3) which points outward and downward and serve for suspending the shopping bag in a shopping cart are arranged on the respective carrying handles.

2. The shopping bag according to Claim 1, **characterized by** the fact that one (2) of the carrying handles (1, 2) is provided with a safety latch (4) that can engage into the other carrying handle (1).

3. The shopping bag according to Claim 1 or 2, **characterized by** the fact that rubber bands (7) which pull the lateral walls (6) toward one another are fixed on the ends of the strips (5).

## Revendications

1. Sac pour achats en matière flexible, avec des poignées de transport agissant conjointement (1, 2) à l'extrémité supérieure de deux parois latérales (6), des organes de fixation pour l'accrochage dans un chariot étant disposés sur les poignées de transport (1, 2), **caractérisé en ce que** les poignées de transport (1, 2) sont fixées sur des baguettes (5) qui empiètent sur les extrémités supérieures des parois latérales (6) et que, sur les poignées de transport, respectivement une languette (3) orientée vers l'extérieur et le bas est disposée pour accrochage dans un chariot.

2. Sac pour achats selon la revendication 1, **caractérisé en ce que**, sur une (2) des poignées de transport (1, 2), une languette de sécurité (4) pouvant être accrochée dans l'autre poignée de transport (1) est prévue.

3. Sac pour achats selon la revendication 1 ou 2, **caractérisé en ce qu'**aux extrémités des baguettes (5), des cordons en caoutchouc (7) qui tirent les parois latérales (6) l'une contre l'autre sont fixés.
